# EUROPÄISCHE PATENTSCHRIFT

(11) **EP 2 622 307 B1**
(45) Veröffentlichungstag und Bekanntmachung des Hinweises auf die Patenterteilung: **20.07.2016**
(21) Anmeldenummer: 11745739.0
(22) Anmeldetag: 29.07.2011
(51) Int. Cl.: G01C 21/26, G08G 1/0969, G06N 5/04

(54) **VERFAHREN UND VORRICHTUNG ZUR ERMITTLUNG ZUMINDEST EINER AUSTRITTSWAHRSCHEINLICHKEIT AUS EINEM, IN EINER DIGITALEN KARTE ALS OFFENES GELÄNDE ERKENNBAREN GELÄNDEGEBIET**
METHOD AND DEVICE FOR DETERMINING AT LEAST ONE EXIT PROBABILITY FROM A TERRAIN RECOGNIZABLE AS OPEN TERRAIN IN A DIGITAL MAP
MÉTHODE ET DISPOSITIF POUR DÉTERMINER AU MOINS UNE PROBABILITÉ DE SORTIE D'UN TERRAIN IDENTIFIABLE COMME TERRAIN OUVERT DANS UNE CARTE NUMÉRIQUE

(30) Priorität: 28.09.2010 DE 102010041513
(43) Veröffentlichungstag der Anmeldung: 07.08.2013
(73) Patentinhaber: Robert Bosch GmbH, 70442 Stuttgart (DE)
(72) Erfinder: USSAT, Caroline, 31785 Hameln (DE); LANDAU, Andreas, 37073 Göttingen (DE)
(86) Internationale Anmeldenummer: PCT/EP2011/063067
(87) Internationale Veröffentlichungsnummer: WO 2012/041566

(56) Entgegenhaltungen:
- REID D B ET AL: "A non-Gaussian filter for tracking targets moving over terrain", CONFERENCE RECORD / TWELTH ASILOMAR CONFERENCE ON CIRCUITS, SYSTEMS AND COMPUTERS : PAPERS PRESENTED NOVEMBER 6 - 8, 1978, PACIFIC GROVE, CALIFORNIA, NEW YORK, NY : IEEE, US, 6. November 1978 (1978-11-06), Seiten 112-116, XP008144292,
- NOUGUES P O ET AL: "We know where you are going: tracking objects in terrain", IMA JOURNAL OF MATHEMATICS APPLIED IN BUSINESS AND INDUSTRY, OXFORD UNIVERSITY PRESS, OXFORD, GB, Bd. 8, Nr. 1, 1. Januar 1997 (1997-01-01), Seiten 39-58, XP008144266, ISSN: 0953-0061, DOI: 10.1093/IMAMAN/8.1.39
- REID D B ET AL: "A non-Gaussian filter for tracking targets moving over terrain", CONFERENCE RECORD / TWELTH ASILOMAR CONFERENCE ON CIRCUITS, SYSTEMS AND COMPUTERS : PAPERS PRESENTED NOVEMBER 6 - 8, 1978, PACIFIC GROVE, CALIFORNIA, NEW YORK, NY : IEEE, US, 6 November 1978 (1978-11-06), pages 112-116, XP008144292,
- NOUGUES P O ET AL: "We know where you are going: tracking objects in terrain", IMA JOURNAL OF MATHEMATICS APPLIED IN BUSINESS AND INDUSTRY, OXFORD UNIVERSITY PRESS, OXFORD, GB, vol. 8, no. 1, 1 January 1997 (1997-01-01) , pages 39-58, XP008144266, ISSN: 0953-0061, DOI: 10.1093/IMAMAN/8.1.39

## Beschreibung

### Stand der Technik

Die vorliegende Erfindung bezieht sich auf ein Verfahren zur Ermittlung zumindest einer Austrittswahrscheinlichkeit aus einem, in einer digitalen Karte als offenes Gelände erkennbaren Geländegebiet, eine Vorrichtung zur Ermittlung zumindest einer Austrittswahrscheinlichkeit aus einem, in einer digitalen Karte als offenes Gelände erkennbaren Geländegebiet, sowie ein Computerprogrammprodukt.

Bekannte straßenbasierte Navigationssysteme bestimmen einen Routenvorschlag basierend auf einer hinterlegten Informationsbasis. Meist ist die Informationsbasis eine digitale Landkarte, die befahrbare Straßen beinhaltet. Der Routenvorschlag kann als Fahrempfehlung über ein Kommunikationssystem an einen Fahrzeuglenker übermittelt werden. Dabei wird über eine Positionsbestimmung des Fahrzeugs ein Abgleich zwischen einer ermittelten Position und dem Routenvorschlag durchgeführt, und die Fahrempfehlung mit Bezug auf ein Fahrzeugumfeld und vorauseilend mit Bezug auf den Routenvorschlag bestimmt. Da die Positionsbestimmung keine absolute Position ausgibt, lediglich eine Positionswahrscheinlichkeit, ist es notwendig, die Straßen in der digitalen Karte beiderseits um einen Toleranzbereich zu erweitern. Befindet sich die bestimmte Position innerhalb des Toleranzbereichs, wird angenommen, dass sich das Fahrzeug auf einer Straße befindet. Dieses als Matching-Verfahren bezeichnete Verfahren gibt die aktuelle Position des Fahrzeugs erst bei einer Überschreitung des Toleranzbereichs als abweichend von einer Straße aus. In dem Fall kann das Verfahren zu der aktuellen Position keine Straße oder deren umgebenden Toleranzbereich zuordnen und definiert die aktuelle Position als Off-Road oder offenes Gelände. Erreicht das Fahrzeug aus einem Off-Road Gebiet kommend körperlich eine Straße und bewegt sich darauf fort, so benötigt das Verfahren für das Matching eine Zeitspanne, bis die Position des Fahrzeugs auf der Straße erkannt wird und erneut eine situationsangepasste Fahrempfehlung für den Fahrzeuglenker ausgegeben werden kann.

Das Dokument DE 101 46 115 B4 beschreibt ein Verfahren, mit dem eine Zielführung zu einem Endzielpunkt mittels Richtungsnavigation durchgeführt wird, wenn eine Position eines Fahrzeugs als außerhalb eines bekannten Straßennetzes befindlich erkannt wird und keine alternative bekannte Straße für eine Zielführung vorhanden ist.

Die Schrift REID D B ET AL: "A non-Gaüssian filter for tracking targets moving over terrain", CONFERENCE RECORD 1 TWELFTH ASILOMAR CONFERENCE ON CIRCUITS, SYSTEMS AND COMPUTERS PAPERS PRESENTED NOVEMBER 6 - 8, 1978, PACIFIC GROVE, CALIFORNIA, NEW YORK, NY IEEE, US, 6. November 1978 (1978-11-06), Seiten 112-116, XP008144292, Seite 112 - Seite 116 offenbart ein nicht-Gauß'sches Filter zur Verfolgung von sich über Grund bewegenden Zielen.

Die Schrift NOUGUES POET AL: "We know where you are going: tracking objects in terrain", IMA JOURNAL OF MATHEMATICS APPLIED IN BUSINESS AND INDUSTRY, OXFORD UNIVERSITY PRESS, OXFORD, GB, Bd. 8, Nr. 1, 1. Januar 1997 (1997-01-01), Seiten 39-58, XP008144266, ISSN: 0953-0061, DOI: 10. 1093/IMAMAN/8. 1.39 Seite 41 - Seite 45, Seite 56 offenbart einen Ansatz zur Verfolgung on Objekten im Gelände.

### Offenbarung der Erfindung

Vor diesem Hintergrund wird mit der vorliegenden Erfindung ein Verfahren zur Ermittlung zumindest einer Austrittswahrscheinlichkeit aus einem, in einer digitalen Karte als offenes Gelände erkennbaren Geländegebiet, weiterhin eine Vorrichtung zur Ermittlung zumindest einer Austrittswahrscheinlichkeit aus einem, in einer digitalen Karte als offenes Gelände erkennbaren Geländegebiet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Der vorliegenden Erfindung liegt die Erkenntnis zugrunde, dass eine zeitliche Verzögerung in einer Routenführung nach Erreichen einer bekannten Straße aus einem offenen Gelände vermieden werden kann, wenn eine Austrittswahrscheinlichkeit eines Fahrzeugs aus dem offenen Gelände von einer aktuellen Position vorherbestimmt werden kann. Damit kann die Routenführung bereits vorbereitet werden, wenn ein wahrscheinlicher Austrittspunkt aus dem offenen Gelände auf einer, an das offene Gelände angrenzenden Straße ermittelt wird. Um eine höhere Vorhersagewahrscheinlichkeit zu erreichen, können dem offenen Gelände und Begrenzungen des offenen Geländes Attribute aus einer digitalen Karte zugeordnet werden, die ein Befahren oder Erreichen wahrscheinlicher oder unwahrscheinlicher machen. Aufgrund dieser Attribute ist es möglich, bezüglich einer aktuellen Position des Fahrzeugs in dem offenen Gelände, eine Wahrscheinlichkeit für ein Erreichen eines oder mehrerer Punkte auf den Begrenzungen des offenen Geländes vorherzubestimmen. Weiterhin können für eine Bestimmung weitere Faktoren, wie eine aktuelle Ausrichtung des Fahrzeugs oder eine aktuelle Geschwindigkeit des Fahrzeugs berücksichtigt werden.

Vorteilhafterweise kann durch Anwendung eines Verfahrens gemäß dem hier vorgestellten Ansatz schneller eine Routenermittlung durchgeführt werden, bevor ein Fahrzeug ein als offenes Gelände erkennbares Gebiet verlässt. Fahr- und Lenkempfehlungen können dadurch ebenfalls schneller von einem Fahrzeuglenker umgesetzt werden, und ein geplantes Ziel schneller erreicht werden. Durch Vermeidung von Fehlweisungen im Anschluss an das Verlassen kann eine Fahrtstrecke minimiert werden und unnötiger Energieverbrauch vermieden werden.

Die vorliegende Erfindung schafft ein Verfahren zur Ermittlung zumindest einer Austrittswahrscheinlichkeit aus einem, in einer digitalen Karte als offenes Gelände erkennbaren Geländegebiet, ausgehend von einer Position innerhalb des Geländegebiets, wobei das Verfahren die in Anspruch 1 aufgeführten Schritte umfasst.

Weiterhin schafft die vorliegende Erfindung eine Vorrichtung zur Ermittlung zumindest einer Austrittswahrscheinlichkeit aus einem, in einer digitalen Karte als offenes Gelände erkennbaren Geländegebiet, ausgehend von einer Position innerhalb des Geländegebiets, wobei die Vorrichtung die in Anspruch 8 aufgeführten Merkmale aufweist.

Eine digitale Karte kann eine Repräsentation von erfassten Daten mit Raumbezug sein. Die erfassten Daten können Raumphänomene repräsentieren. Beispielsweise können Raumphänomene Verkehrswege, Gelände, Gewässer oder Bewuchs sein. Die Raumphänomene können generalisiert und digitalisiert in der digitalen Karte hinterlegt sein. Geländeabschnitte ohne Verkehrswege können in der digitalen Karte als offenes Gelände oder Off-Road Gebiet gekennzeichnet sein. Das offene Gelände kann Geländeeigenschaften aufweisen. Ein als offenes Gelände erkennbares Geländegebiet kann von erfassten Raumphänomenen, wie Verkehrswegen, Siedlungsgebiete oder Gewässer begrenzt sein. Das Geländegebiet kann unterteilt werden. Das Unterteilen kann durch willkürlich oder systematisch platzierte Grenzen erfolgen. Die Grenzen können das Geländegebiet in Zellen aufteilen. Die Zellen können regelmäßig oder unregelmäßig angeordnet sein. Die Zellen können beliebige flächige Formen, wie beispielsweise dreieckig, viereckig, fünfeckig oder sechseckig usw. aufweisen. Zwei benachbarte Zellen können an einer gemeinsamen Grenze einen Übergang aufweisen. Zwei Zellen mit einem einzigen Berührpunkt können einen Übergang aufweisen, beispielsweise an einem Knotenpunkt mehrerer Grenzen. Dem Übergang kann eine Initial-Übergangswahrscheinlichkeit von der ersten Zelle in die zweite Zelle zugewiesen werden. In der ersten Zelle können alle Initial-Übergangswahrscheinlichkeiten zu benachbarten Zellen zu einem Gesamtübergangswahrscheinlichkeitswert, summiert werden, beispielsweise dem Wert eins.

Die Initial-Übergangswahrscheinlichkeiten können gleich sein. Die Initial-Übergangswahrscheinlichkeit kann durch die Ausführung der Schritte des Verfahrens angepasst werden. Im Schritt des Anpassens kann ein Wert der Initial-Übergangswahrscheinlichkeit verändert werden, d.h. der Wert der Initial-Übergangswahrscheinlichkeit kann erhöht oder verringert werden. Durch das Anpassen resultiert eine angepasste Übergangswahrscheinlichkeit. Das Erhöhen oder Verringern des Werts kann eine höhere oder niedrigere Wahrscheinlichkeit repräsentieren, die zugeordnete Zelle zu verlassen oder zu erreichen. Die Wahrscheinlichkeit kann durch Raumphänomene in der Zelle oder der benachbarten Zelle beeinflusst werden. Die Raumphänomene können durch eine Information aus der digitalen Karte abgebildet sein. Beispielsweise kann es unwahrscheinlich sein, mit einem Fahrzeug ein, für das Fahrzeug schlecht befahrbares Terrain zu erreichen. Die Wahrscheinlichkeit kann dann gegen null streben, ein unbefahrbares Terrain zu erreichen. Dementsprechend kann es wahrscheinlicher sein, ein für das Fahrzeug gut befahrbares Terrain zu erreichen oder befahren, und gleichzeitig kann es unwahrscheinlicher sein ein gut befahrbarbares Terrain zu verlassen. Durch die angepassten Übergangswahrscheinlichkeiten, und, falls keine Anpassung möglich ist durch die Initial-Übergangswahrscheinlichkeiten, kann eine Austrittswahrscheinlichkeit für eine Zelle am Rand des offenen Geländes / des Off-Road Gebiets ermittelt werden. Dazu können die Übergangswahrscheinlichkeiten der Übergänge zwischen einer Position innerhalb des Geländegebiets und der Zelle am Rand gemäß einer Verarbeitungsvorschrift kombiniert werden. Die Verarbeitungsvorschrift kann beispielsweise eine Markov-Kette sein, wobei je ein Element der Kette je eine Zelle repräsentieren kann, und die Markovwahrscheinlichkeiten zwischen den Elementen der Kette die Übergangswahrscheinlichkeiten der Übergänge repräsentieren können.

Die vorliegende Erfindung schafft ferner eine Vorrichtung oder ein Navigationsgerät, das ausgebildet ist, um die Schritte des erfindungsgemäßen Verfahrens durchzuführen bzw. umzusetzen. Insbesondere kann die Vorrichtung oder die Navigationsvorrichtung Einrichtungen aufweisen, die ausgebildet sind, um je einen Schritt des Verfahrens auszuführen. Auch durch diese Ausführungsvariante der Erfindung in Form eines Steuergeräts kann die der Erfindung zugrunde liegende Aufgabe schnell und effizient gelöst werden.

Unter einer Vorrichtung oder einem Navigationsgerät kann vorliegend ein elektrisches Gerät verstanden werden, das Sensorsignale verarbeitet und in Abhängigkeit davon Navigationssignale ausgibt. Das Navigationsgerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Navigationsgeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einer Vorrichtung oder einem Navigationsgerät ausgeführt wird.

Gemäß einer weiteren Ausführungsform der vorliegenden Erfindung können im Schritt des Unterteilens mehrere Übergänge ein Netz ausbilden, wobei das Netz das Geländegebiet umfasst, und/oder wobei die Zellen auf eine vorherbestimmte maximale Fläche des Geländegebiets begrenzt werden. Das Netz kann das Geländegebiet vollständig und lückenlos überdecken. Wenn eine Größe des Geländegebiets eine vorgegebene Größe übersteigt, kann das Gebiet durch eine oder mehrere Hilfsgrenzen auf die vorgegebene Größe beschränkt werden. Beispielsweise kann die vorgegebene Größe ein Quadratkilometer sein. Dadurch kann eine Bearbeitungszeit für die Ausführung der Schritte des Verfahrens beschränkt werden und die Schritte des Verfahrens schnell durchgeführt werden.

In einer weiteren Ausführungsform der vorliegenden Erfindung kann im Schritt des Anpassens die Initial-Übergangswahrscheinlichkeit unter Verwendung einer Klasse eines Verkehrswegs angepasst werden, wenn die Zelle zumindest den Verkehrsweg beinhaltet und die digitale Karte Informationen über den Verkehrsweg und die Klasse enthält, und/oder die Initial-Übergangswahrscheinlichkeit kann unter Verwendung zumindest einer Geländeeigenschaft der Zelle oder der benachbarten Zelle angepasst werden, wenn die digitale Karte Informationen über die Geländeeigenschaft enthält. Die Klasse eines Verkehrswegs kann bestimmte Informationen repräsentieren, die eine Wahrscheinlichkeit eines Erreichens und/oder eines Verlassens des Verkehrswegs betreffen. Beispielsweise kann eine Übergangswahrscheinlichkeit von einer angrenzenden Zelle in eine Zelle mit einer Straße niedriger Klasse, wie ein Feldweg oder eine Kommunalstraße höher sein, als die Übergangswahrscheinlichkeit in eine Zelle mit einer Straße höherer Klasse, wie eine Schnellstraße. Die Übergangswahrscheinlichkeit in eine Zelle mit einer Straße höchster Klasse, wie eine Autobahn kann gegen null gehen. Eine Autobahn kann im Allgemeinen ausschließlich durch Autobahnauffahrten, also über angeschlossene Straßen niedrigerer Klassen erreicht werden. Damit ist es von Vorteil, wenn die ermittelte Austrittswahrscheinlichkeit auf eine Zelle mit einer sehr hochklassigen Straße, z.B. einer Autobahn sehr klein oder null ist. Eine Geländeeigenschaft kann auch die Befahrbarkeit einer Zelle beeinflussen. Beispielsweise kann eine Übergangswahrscheinlichkeit von einer Zelle, die eine geringe Geländeneigung aufweist zu einer Zelle, die keine Geländeneigung aufweist höher sein, als eine Übergangswahrscheinlichkeit von einer Zelle mit geringer Geländeneigung zu einer Zelle mit starker Geländeneigung. Zellen, die für ein Fahrzeug nicht befahrbar sind, wie Felsen, Steilhänge, Wasserflächen oder dichter Wald, sowie Bebauung können eine Übergangswahrscheinlichkeit zu diesen Zellen aufweisen, die gegen null streben kann. Begrenzen unbefahrbare Zellen das Geländegebiet, so ist es vorteilhaft, wenn die Austrittswahrscheinlichkeit dort möglichst gering ist. Damit kann eine falsche Berechnung von Routenvorschlägen vermieden werden, und nur aussichtsreiche Austrittspunkte aus dem offenen Gelände für eine Vorausberechnung berücksichtigt werden.

Gemäß einer weiteren Ausführungsform der vorliegenden Erfindung kann im Schritt des Anpassens die Initial-Übergangswahrscheinlichkeit unter Verwendung einer momentanen Bewegungsrichtung und/oder einer momentanen Geschwindigkeit eines Fahrzeugs, in dem das Verfahren ausgeführt wird, angepasst werden. Damit kann ein momentaner Fahrzustand bei der Ermittlung der Austrittswahrscheinlichkeit berücksichtigt werden. Beispielsweise kann es unwahrscheinlich sein, dass das Fahrzeug extreme Richtungs- und/oder Geschwindigkeitsänderungen vollzieht. Die momentane Fahrzeuggeschwindigkeit kann eine Fähigkeit des Fahrzeugs beeinflussen, Kurven zu fahren. Beispielsweise kann ein Fahrzeug bei Schrittgeschwindigkeit engere Kurven fahren, als bei Höchstgeschwindigkeit. Damit können Übergänge in Fahrtrichtung, oder mit moderaten Lenkausschlägen erreichbare Übergänge eine höhere Übergangswahrscheinlichkeit aufweisen, als Übergänge beispielsweise neben dem Fahrzeug oder entgegen der momentanen Fahrtrichtung.

Ferner wird erfindungsgemäß im Schritt des Anpassens die Initial-Übergangswahrscheinlichkeit unter Verwendung einer Distanz des Übergangs zu einem Eintrittspunkt des Fahrzeugs in das offene Gelände angepasst werden. Beispielsweise kann ein Parkplatz oder eine Einfahrt in Privatgelände nicht in der Karte erfasst sein und somit als offenes Gelände in der Karte hinterlegt sein. Dann kann damit gerechnet werden, dass das Fahrzeug das offene Gelände an der gleichen Stelle wieder verlassen wird. Entfernt sich das Fahrzeug aber sehr weit von dem Eintrittspunkt, so kann es wahrscheinlicher sein, dass das Fahrzeug an einer anderen Stelle das Off-Road Gebiet / offene Gelände verlässt.

In einer weiteren Ausführungsform kann im Schritt des Unterteilens zumindest einem weiteren Übergang von der Zelle in eine weitere benachbarte Zelle eine weitere Initial-Übergangswahrscheinlichkeit zugeordnet werden, wobei sich der weitere Übergang zwischen der Position und einem Rand des Geländegebiets befindet. Im Schritt des Anpassens der weiteren Initial-Übergangswahrscheinlichkeit des weiteren Übergangs kann die weitere Initial-Übergangswahrscheinlichkeit ansprechend auf ein Vorhandensein zumindest einer weiteren Information aus der digitalen Karte angepasst werden, um eine weitere angepasste Übergangswahrscheinlichkeit für den weiteren Übergang zu erhalten, wobei die weitere Information der Zelle oder der weiteren benachbarten Zelle zugeordnet ist. Im Schritt des Ermittelns kann eine weitere Austrittswahrscheinlichkeit ermittelt werden, wobei die weitere Austrittswahrscheinlichkeit zumindest unter Verwendung der weiteren angepassten Übergangswahrscheinlichkeit des weiteren Übergangs ermittelt wird. Der Übergang kann sich zwischen einer ersten und einer zweiten Zelle befinden. Der weitere Übergang kann sich zwischen der ersten Zelle und einer dritten Zelle befinden. Übergänge befinden sich zwischen Zellen, die direkt untereinander erreichbar sind. Die dritte Zelle kann direkt benachbart zu der ersten Zelle sein. Die zweite und dritte Zelle sind nicht notwendigerweise direkt benachbart, können es aber sein. Die weitere Initial-Übergangswahrscheinlichkeit kann dem weiteren Übergang zugeordnet werden.

Die weitere Initial-Übergangswahrscheinlichkeit kann als eine zweite Initial-Übergangswahrscheinlichkeit bezeichnet werden. Das Anpassen der weiteren Initial-Übergangswahrscheinlichkeit kann entsprechend einer Information aus der digitalen Karte zu der ersten und/oder dritten Zelle erfolgen. Die weitere angepasste Übergangswahrscheinlichkeit kann als zweite angepasste Übergangswahrscheinlichkeit bezeichnet werden und kann den Übergang zwischen der ersten und der dritten Zelle charakterisieren. Die Austrittswahrscheinlichkeit kann eine erste Austrittswahrscheinlichkeit sein. Die weitere Austrittswahrscheinlichkeit kann eine zweite Austrittswahrscheinlichkeit sein. Die erste und die zweite Austrittswahrscheinlichkeit können unterschiedliche Zellen betreffen, beide Wahrscheinlichkeiten können aber auch die selbe Zelle betreffen, jedoch unter Verwendung unterschiedlicher Übergangswahrscheinlichkeiten. Für die Bestimmung der ersten Austrittswahrscheinlichkeit kann die erste Übergangswahrscheinlichkeit verwendet werden, für die Bestimmung der zweiten Austrittswahrscheinlichkeit kann die zweite Übergangswahrscheinlichkeit verwendet werden. Eine derartige Ausführungsform der vorliegenden Erfindung bietet den Vorteil, dass es nun möglich ist, einen wahrscheinlichsten Austrittspunkt aus dem Geländegebiet zu bestimmen, für den die Übertrittwahrscheinlichkeiten von unterschiedlichen Übergängen verwendet werden. Dies erhöht die Vorhersagegenauigkeit.

Ferner kann auch im Schritt des Ermittelns ein Austrittspfad aus dem Geländegebiet ermittelt werden, wobei der Austrittspfad den Übergang enthält, wenn die Austrittswahrscheinlichkeit höher ist, als die weitere Austrittswahrscheinlichkeit. Der ermittelte Austrittspfad kann derjenige Austrittspfad sein, der die höhere Austrittswahrscheinlichkeit aufweist. Damit kann die Fahrempfehlung für den Fahrzeuglenker im Voraus an der wahrscheinlicheren Austrittsstelle aus dem offenen Gelände erfolgen und damit schneller zur Verfügung stehen.

In einer zusätzlichen Ausführungsform der vorliegenden Erfindung kann im Schritt des Unterteilens zumindest einem Folgeübergang von der benachbarten Zelle in eine benachbarte Folgezelle eine Folgeinitial-Übergangswahrscheinlichkeit zugeordnet werden, wobei sich der Folgeübergang zwischen der Position und einem Rand des Geländegebiets befindet. Im Schritt des Anpassens kann die Folgeinitial-Übergangswahrscheinlichkeit des Folgeübergangs ansprechend auf ein Vorhandensein zumindest einer Folgeinformation aus der digitalen Karte angepasst werden, wobei die Folgeinformation der benachbarten Zelle oder der Folgezelle zugeordnet ist, um eine angepasste Folgeübergangswahrscheinlichkeit für den Folgeübergang zu erhalten. Ferner kann im Schritt des Ermittelns die Austrittswahrscheinlichkeit unter Verwendung der angepassten Folgeübergangswahrscheinlichkeit des Folgeübergangs ermittelt werden. Die Folgezelle kann eine vierte Zelle sein. Die Folgeinitial-Übergangswahrscheinlichkeit kann eine dritte Initial-Übergangswahrscheinlichkeit sein. Die Folgeinformation kann der zweiten oder der vierten Zelle zugeordnet sein. Die angepasste Folgeübergangswahrscheinlichkeit kann eine dritte angepasste Übergangswahrscheinlichkeit sein. Die Austrittswahrscheinlichkeit kann unter Verwendung der ersten und dritten angepassten Übergangswahrscheinlichkeit ermittelt werden. Eine derartige Ausführungsform der vorliegenden Erfindung bietet den Vorteil, dass nun eine Abfolge von Übergängen zur Bestimmung der Austrittswahrscheinlich verwendet wird. Dies ermöglicht die Berücksichtigung von Objekten oder Raumphänomenen, die in Zellen enthalten sind, die sich weiter von der ursprünglich betrachteten Zelle befinden. Auf diese Weise wird die Wahrscheinlichkeit der Vorhersage nochmals erhöht, an welcher Stelle das offene Gelände wieder verlassen wird.

Die Erfindung wird anhand der beigefügten Zeichnungen beispielhaft näher erläutert. Es zeigen:
- Fig. 1: ein Ablaufdiagramm eines ersten Ausführungsbeispiels der vorliegenden Erfindung;
- Fig. 2: ein Ablaufdiagramm eines zweiten Ausführungsbeispiels der vorliegenden Erfindung;
- Fig. 3: ein Blockschaltbild eines Ausführungsbeispiels der vorliegenden Erfindung;
- Fig. 4: ein Schaubild zur Verdeutlichung des Vorgehens bei der Bestimmung einer Austrittswahrscheinlichkeit gemäß einem Ausführungsbeispiel der vorliegenden Erfindung; und
- Fig. 5: ein Detailschaubild zur Verdeutlichung des Vorgehens bei der Bestimmung einer Austrittswahrscheinlichkeit gemäß einem Ausführungsbeispiel der vorliegenden Erfindung.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

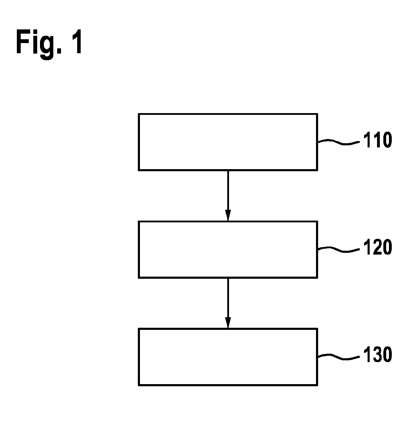

Fig. 1 zeigt als ein erstes Ausführungsbeispiel der vorliegenden Erfindung ein Ablaufdiagramm einer Modellierung der Bewegungen in einem Off-Road Gebiet zur Vorhersage der zukünftigen Bewegungen mittels eines Markov-Prozesses. Ein Verfahren zur Ermittlung zumindest eine Austrittswahrscheinlichkeit aus einem, in einer digitalen Karte als offenes Gelände erkennbaren Geländegebiet, weist einen Schritt 110 des Unterteilens, einen Schritt 120 des Anpassens, sowie einen Schritt 130 des Ermittelns auf. Im Schritt 110 des Unterteilens wird das Geländegebiet in eine Mehrzahl von Zellen unterteilt. Zumindest einem Übergang von einer Zelle in eine benachbarte Zelle wird eine Initial-Übergangswahrscheinlichkeit zugeordnet. Dabei befindet sich der Übergang zwischen einer Position innerhalb des Geländegebiets und dem Rand des Geländegebiets. Im Schritt 120 des Anpassens wird die Initial-Übergangswahrscheinlichkeit des Übergangs angepasst, um eine angepasste Übergangswahrscheinlichkeit zu erhalten. Das Anpassen erfolgt ansprechend auf ein Vorhandensein zumindest einer Information aus der digitalen Karte. Dabei ist die Information der Zelle und/oder der benachbarten Zelle zugeordnet. Im Schritt 130 des Ermittelns wird eine Austrittswahrscheinlichkeit unter Verwendung der angepassten Übergangswahrscheinlichkeit des Übergangs ermittelt.

Anhand des hier vorgestellten Verfahrens lassen sich die Wahrscheinlichkeiten dafür bestimmen, an einem Punkt der digitalen Straßenkarte aus einem Off-Road Gebiet, in das ein Fahrer mit seinem Fahrzeug gelangt ist, wieder auszutreten. Dadurch wird derjenige von diesen Punkten mit der höchsten Wahrscheinlichkeit ermittelt. Dazu wird ein Raster über das Off-Road Gebiet gelegt, in dem sich der Fahrer mit seinem Fahrzeug befindet. Die Felder des Rasters dienen als Zustände für einen Markov-Prozess. Mit Hilfe der Topographie des Gebietes, der aktuellen Position und Ausrichtung des Fahrzeugs und des Fahrzeugmodells zur physikalisch korrekten Bewegungsmodellierung sowie den Eigenschaften der das Off-Road Gebiet eingrenzenden Straßen werden Wahrscheinlichkeiten für den Wechsel von einem Zustand in den anderen berechnet. Optional können ebenfalls die Wahrscheinlichkeiten für das Eintrittsgebiet angepasst werden. So kann die Wahrscheinlichkeit berechnet werden, eine der äußeren Zustände und damit eine Straße von der aktuellen Position aus zu erreichen. Auf diese Weise kann sich das Navigationssystem schneller bei Wiedereintritt in das Straßennetz orientieren und gegebenenfalls den Fahrer führen. Die so ermittelten Wahrscheinlichkeiten werden beispielsweise bei einer, insbesondere mit jeder, Positionsveränderung aktualisiert. Zudem bietet das Verfahren immer eine Lösung an, auch wenn die vorhandenen Daten nicht alle benötigten Informationen zur Verfügung stellen. Das hier vorgestellte Verfahren, ermöglicht eine schnellere Orientierung bei Wiedereintritt in das Straßennetz aus einem Off-Road Gebiet.

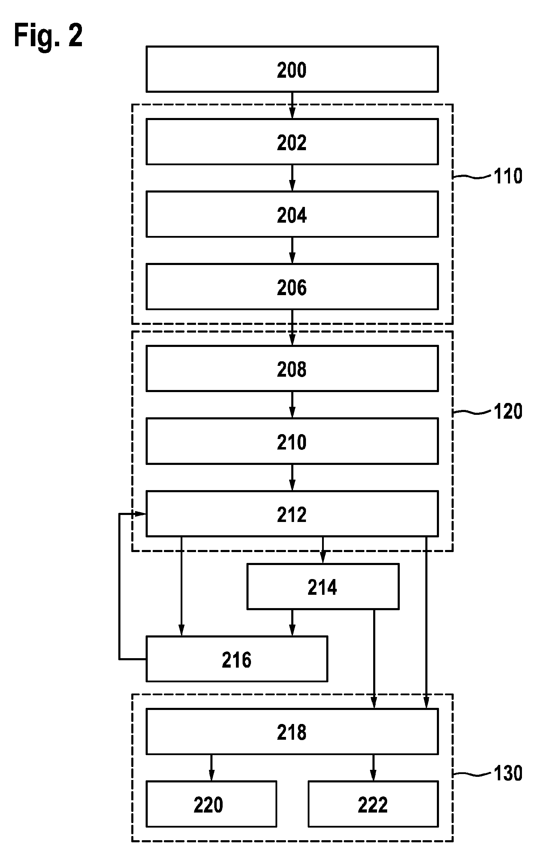

Fig. 2 zeigt ein Flussdiagramm eines weiteren Ausführungsbeispiels der vorliegenden Erfindung. Das Verfahren zur Ermittlung zumindest einer Austrittswahrscheinlichkeit aus einem, in einer digitalen Karte als offenes Gelände erkennbaren Geländegebiet wird in einem Schritt 200 initialisiert. Dabei wird die Position des Fahrzeugs als im offenen Gelände befindlich, oder als "Off-Road" markiert.

Der Schritt 110 des Unterteilens des Geländegebiets ist in mehrere Teilschritte untergliedert. In einem Teilschritt 202 des Identifizierens der Grenzen werden die Grenzen des Off-Road Gebiets identifiziert. In einem Teilschritt 204 der Überdeckung des Gebiets durch ein Raster wird das Geländegebiet durch ein Raster überdeckt. In einem Teilschritt 206 des Bestimmens der Anfangsübergangswahrscheinlichkeiten werden die Initial-Übergangswahrscheinlichkeiten bestimmt. Auch der Schritt 120 des Anpassens weist eine Untergliederung in mehrere Teilschritte auf. In einem Teilschritt 208 der Verbesserung der Wahrscheinlichkeiten werden die Anfangswahrscheinlichkeiten durch Berücksichtigung der Eigenschaften der, das Gebiet beschränkenden Straßen angepasst. In einem Teilschritt 210 der Verbesserung durch Berücksichtigung der Geländeeigenschaften werden die Anfangswahrscheinlichkeiten unter Berücksichtigung der Geländeeigenschaften verbessert. In einem Teilschritt 212 der Verbesserung in der Umgebung um die Position des Fahrzeugs werden die Wahrscheinlichkeiten durch Berücksichtigung der physikalisch möglichen Bewegungen des Fahrzeugs verbessert. Ein Schritt 214 der Erhöhung der Wahrscheinlichkeiten um den Eintrittspunkt in das Off-Road Gebiet kann optional durchgeführt werden. In einem Schritt 216 werden die Wahrscheinlichkeiten bei Veränderung der Position aktualisiert.

Der Schritt 130 des Ermittelns weist ebenso mehrere Teilschritte auf. In einem Teilschritt 218 des Bestimmens wird ein Ergebnis für Wahrscheinlichkeiten des Erreichens der Zellen auf den Rändern ermittelt. In einem Teilschritt 220 des Auswählens wird der wahrscheinlichste Austrittspunkt bestimmt. Als Alternative dazu kann in einem Teilschritt 222 ein normiertes Wahrscheinlichkeitsbild bestimmt werden.

Während einer Fahrt ist es möglich, dass der Fahrer mit seinem Fahrzeug das Netz der Straßen verlässt. Die meisten Navigationsgeräte sind jedoch darauf ausgelegt, den Fahrer auf den dafür vorgesehenen und in der digitalen Karte hinterlegten Straßen zu einem Zielpunkt führen zu können. Aufgrund dieser Auslegung versucht das System die Position des Fahrers durch das sogenannte Matching-Verfahren einer Position auf der Straße zuzuordnen. Auch bei Verlassen der Straße versucht das System die Position auf der Straße zu halten. Erst bei Überschreiten einer gewissen Schranke wird die Annahme verworfen, dass sich der Fahrer mit seinem Fahrzeug weiterhin auf der Straße befindet. Die Position wird daher nicht mehr gematcht. Stattdessen zeigt das System die ermittelte Position auf einem Off-Road Gebiet an. Normalerweise erreicht der Fahrer nach einer bestimmten Zeit wieder das Straßennetz und bewegt sich weiter auf ihm fort. Bei diesem erneuten Übergangsprozess benötigt das Navigationssystem eine Zeit der Anpassung, um seine Position auf der Straße zu finden und seine eigentliche Aufgabe, das Führen des Fahrers, wieder zu erfüllen. Das hier vorgestellte Verfahren verbessert diesen Ansatz, indem es dem System ermöglicht, mögliche und wahrscheinliche Austrittspunkte aus dem Off-Road Gebiet im Voraus zu berechnen und sich so schneller wieder orientieren zu können, wenn der Fahrer das Off-Road Gebiet verlässt. Das Verfahren nutzt die ihm zur Verfügung stehenden Informationen, um zu berechnen, an welchem Punkt der Fahrer mit seinem Fahrzeug mit der größten Wahrscheinlichkeit wieder aus dem Off-Road Gebiet austritt. Dabei werden ausgehend von einer Initialisierung sukzessive die Übergangswahrscheinlichkeiten mit jeder Information verbessert.

In der nachfolgenden Beschreibung wird nachmals ein Ausführungsbeispiel der vorliegenden Erfindung an Hand des Ablaufdiagrammes aus der Fig. 2 detailliert beschrieben. Das Verfahren wird initialisiert (Schritt 200), wenn die aktuelle Position als Off-Road klassifiziert wird. Dazu werden im ersten Schritt (Schritt 202) die Straßenkanten bestimmt, die das Off-Road Gebiet, in dem sich der Fahrer mit seinem Fahrzeug befindet, begrenzen. Ist dieses Gebiet zu groß oder wird es aufgrund von topographischen Besonderheiten wie z.B. Meer nicht ausschließlich von Straßen begrenzt, so wird die Größe des Gebiets auf eine gewisse Größe, z.B. einen Quadratkilometer beschränkt.

Erreicht der Fahrer während der Fahrt mit seinem Fahrzeug im Off-Road-Gebiet einen solchen künstlich erzeugten Rand, wird das Verfahren erneut mit einem neuen Gebiet initialisiert. Durch dieses Vorgehen lässt sich die Komplexität beschränken, um eine zu lange Berechnungszeit zu verhindern. Über dieses Gebiet wird nun ein Raster gelegt (Schritt 204), das die begrenzenden Straßen einschließt. Die Beschreibung erfolgt für ein Rechteckraster, es können jedoch auch andere Raster verwendet werden. Jedes Feld des Rasters dient als Zustand für einen diskreten Markov-Prozess. Zur Durchführung einer solchen Markov-Kette werden Übergangswahrscheinlichkeiten benötigt (Schritt 206) von einem Zeitpunkt zum anderen in einen anderen Zustand zu wechseln oder in ihm zu verbleiben. Die Summe der Wahrscheinlichkeiten sollte nach Vorgabe 1 ergeben. Diese werden dann benutzt, um eine ganze Kette zu berechnen. Die Zellen am Rand erhalten die Wahrscheinlichkeit 1, dass die Markov-Kette in diesem Zustand verbleibt. Die Wahrscheinlichkeiten, dass in eine andere Zelle gesprungen wird, wird auf 0 gesetzt. Damit stellen diese Zellen einen sogenannten stationären Zustand dar, in dem die Kette verbleibt.

In den restlichen Zellen wird die Wahrscheinlichkeit, dass der Zustand in der Zelle verbleibt, auf 0 gesetzt. Die Wahrscheinlichkeit, dass in eine benachbarte Zelle gesprungen wird, wird gleichverteilt initialisiert. Bei einem Rechteckraster, in dem Diagonalsprünge zugelassen sind, ergibt sich damit eine Wahrscheinlichkeit von 1/8, in eine benachbarte Zelle zu springen. Damit sind für alle Zellen die Initial-Übergangswahrscheinlichkeiten gegeben.

Im Folgenden werden diese Wahrscheinlichkeiten unter Zuhilfenahme der zur Verfügung stehenden Informationen weiter verbessert. Im ersten Verbesserungsschritt (Schritt 208) werden beispielsweise die Eigenschaften der Straßen, die in der digitalen Karte abgelegt sind, dahingehend geprüft, wie wahrscheinlich es ist, von einem Off-Road Gebiet auf sie zu gelangen. So ist die Wahrscheinlichkeit auf Straßen höherer Klassen, wie z.B. Autobahnen, zu gelangen deutlich geringer, als auf Straßen niedrigerer Klassen, wie z.B. Schotterpisten. Diese sind meist nur ungenügend digitalisiert oder führen direkt in ein Off-Road Gebiet. Daher ist die Wahrscheinlichkeit auf einer solchen Straße das Off-Road Gebiet zu verlassen deutlich höher.

Durch diesen Schritt werden die Übergangswahrscheinlichkeiten der zu den äußeren Zellen benachbarten Zellen angepasst. Die Übergangswahrscheinlichkeiten zu allen Außenzellen werden erhöht oder verringert und zu den anderen weiter innen liegenden Zellen dementsprechend ebenfalls gleichmäßig erhöht oder verringert. Es erfolgt auch keine Veränderung der Wahrscheinlichkeit von äußeren Zellen, die nicht Teil einer begrenzenden Straße sind und Teil einer künstlich erzeugten Gebietsgrenze sind. Im weiteren Verlauf des Verfahrens werden sie beispielsweise als auf einer imaginären Straße liegend angesehen. Erst bei der Auswertung werden sie differenziert behandelt.

Im zweiten möglichen Verbesserungsschritt (Schritt 210) werden, falls vorhanden, Informationen über die Topographie des Off-Road Gebietes benutzt, um die Übergangswahrscheinlichkeiten der Zellen innerhalb des Gebiets anzupassen. Falls das Gebiet absolut unpassierbare Stellen, wie z.B. Seen beinhaltet, so werden die Übergangswahrscheinlichkeiten, auf die entsprechenden Zellen zu springen, auf 0 gesetzt. Ebenso werden Höhenunterschiede dahingehend benutzt, dass die Wahrscheinlichkeiten für den Übergang von solchen Zellen deutlich verringert und welche mit wenig Höhenunterschied entsprechend erhöht werden. Maßgebend für diese Veränderung ist, die zum Fahren einfacheren Strecken mit höheren Wahrscheinlichkeiten auszustatten.

Die dritte mögliche Verbesserung (Schritt 212) betrifft die Zellen im Umkreis der aktuellen Position. Hier werden die Wahrscheinlichkeiten gemäß den physikalischen Gegebenheiten angepasst, wie sich das Fahrzeug bewegen kann. So werden Sprünge von einer Zelle zu einer anderen, die nur durch unnatürliche Lenkbewegungen möglich sind, mit sehr geringen Wahrscheinlichkeiten belegt, während die Übergangswahrscheinlichkeiten zu Zellen, die durch eine Geradeaus-Bewegung und leichte Lenk-Bewegungen vom Fahrzeugs erreichbar sind, höher bewertet werden. Dieser Schritt erhöht die Komplexität des Verfahrens, da die Übergangswahrscheinlichkeiten nicht mehr starr sind, sondern sich aufgrund der veränderten Position und der Fahrtrichtung in jedem Schritt verändern, doch hat diese lokale Anpassung auf die Wahrscheinlichkeiten, einen Endzustand zu erreichen, große Auswirkungen. Gerade bei Annäherung an den Rand, kristallisiert sich so ein Austrittspunkt schneller heraus.

Optional können in einem vierten Schritt (Schritt 214) die Wahrscheinlichkeiten um den Eintrittspunkt in das Off-Road Gebiet erhöht werden. Damit wird die Annahme verfolgt, dass der Fahrer beabsichtigt, nur kurz im Off-Road-Gebiet zu verweilen und dieses an der gleichen Stelle wieder zu verlassen. Dazu trägt die Erhöhung der Wahrscheinlichkeit für das Passieren des entsprechenden Übergangs bei. Solange der Fahrer sich in diesem Umkreis um die entsprechende Zelle befindet, ist die Ausrichtung auf den Eintrittspunkt gegeben. Je mehr der Fahrer sich vom Eintrittspunkt entfernt, desto geringer wird der Einfluss dieser Erhöhung, was der Annahme entspricht, dass der Fahrer einen anderen Austrittspunkt anvisiert hat. Sind alle Übergangswahrscheinlichkeiten gegeben, so können für alle äußeren Zellen die Wahrscheinlichkeiten mit Hilfe eines Markov-Kette berechnet werden (Schritt 218), diese von der aktuellen Position zu erreichen. Diese Berechnung erfolgt beispielsweise mit üblichen mathematischen Methoden. Ebenso kann so die Zelle bestimmt werden (Schritt 220), die die höchste Erreichungswahrscheinlichkeit besitzt. Diese Zelle wird zu diesem Zeitpunkt als der wahrscheinlichste Austrittspunkt aus dem Off-Road Gebiet angenommen. An dieser Stelle kann differenziert werden, falls es sich um eine Zelle handelt, die auf einer imaginären Straße liegt. So kann entweder die Aussage getroffen werden, dass der Fahrer vorerst nicht beabsichtigt, das Off-Road Gebiet zu verlassen. Oder aber es wird die äußere Zelle auf einer realen Straße mit der höchsten Erreichungswahrscheinlichkeit gesucht. Alternativ ist es auch möglich, die Erreichungswahrscheinlichkeiten für alle äußeren Zellen zu normieren, um so ein allgemeines Wahrscheinlichkeitsbild über die Austrittspunkte zu erhalten (Schritt 222). Auch hier können alle äußeren Zellen oder nur die auf einer realen Straße berücksichtigt werden.

Hier sei anzumerken, dass auch ohne zusätzliche Informationen die Berechnung der Wahrscheinlichkeiten, eine äußere Zelle zu erreichen, jederzeit aufgrund der Initialisierung möglich ist. In diesem Fall entspricht das Verfahren einem kürzeste-Wege-Verfahren, das denjenigen Austrittspunkt errechnet, der den geringsten Abstand zur aktuellen Position hat.

Verändert sich die Position des Fahrzeugs bei der nächsten Positionsmessung, so dass der Fahrer sich in einer anderen Zelle befindet, was hier den nächsten Zeitschritt darstellt, so kann das Verfahren beispielsweise im dritten Verbesserungsschritt (Schritt 212) wieder aufgenommen werden (Schritt 216). Dabei werden die Übergangswahrscheinlichkeiten im Umfeld um die Zelle, in der sich das Fahrzeug gerade befindet neu angepasst. Zellen, die sich nun nicht mehr in der unmittelbaren Umgebung befinden, erhalten die ursprünglichen Übergangswahrscheinlichkeiten ohne Berücksichtigung des Fahrzeugmodells. Diejenigen Zellen, die sich im Umfeld des Fahrzeugs befinden werden dem Fahrzeugmodell (beispielsweise in Bezug auf eine maximal mögliche Lenkbarkeit und damit eine Erreichbarkeit dieser Zellen) entsprechend angepasst.

Die zuvor berechneten Wahrscheinlichkeiten können in einem Speicher abgelegt werden, um sie wieder zu benutzen, für den Fall, dass die Zelle wieder aus dem Umfeld des Fahrzeugs heraus fällt. Danach wird das Verfahren wie oben beschrieben wieder aufgenommen und neue Wahrscheinlichkeiten berechnet. Um die Neuberechnung zu vereinfachen, können bestimmte Teilketten zu den äußeren Zellen abgespeichert werden. Werden diese von der Anpassung im Umfeld der aktuellen Position des Fahrzeugs nicht beeinflusst, so behalten diese weiter ihre Gültigkeit. Je mehr Teilketten gespeichert werden, desto schneller wird das Verfahren aber desto mehr Speicherplatz wird verwendet.

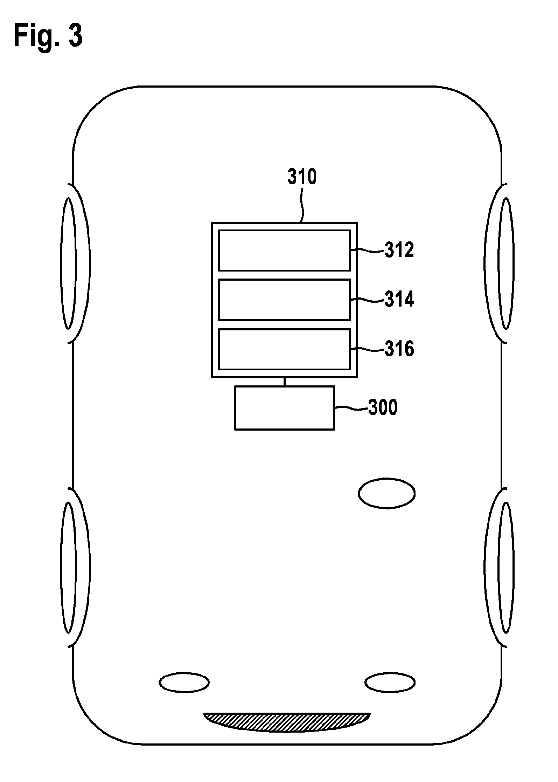

Fig. 3 zeigt ein Blockschaltbild eines Ausführungsbeispiels der vorliegenden Erfindung. Ein Fahrzeug weist ein Navigationssystem 300 auf und befindet sich an einer Position. An das Navigationssystem 300 ist eine Vorrichtung 310 zur Ermittlung zumindest eine Austrittswahrscheinlichkeit aus einem, in einer digitalen Karte als offenes Gelände erkennbaren Geländegebiet angeschlossen. Die Vorrichtung 310 weist eine Einrichtung 312 zum Unterteilen des Geländegebiets in eine Mehrzahl von Zellen auf. In der Einrichtung 312 wird zumindest einem Übergang von einer Zelle in eine benachbarte Zelle eine Initial-Übergangswahrscheinlichkeit zugeordnet. Dabei befindet sich der Übergang zwischen der Position des Fahrzeugs und einem Rand des Geländegebiets. Weiterhin weist die Vorrichtung 310 eine Einrichtung 314 zum Anpassen der Initial-Übergangswahrscheinlichkeit des Übergangs auf. In der Einrichtung 314 wird die Initial-Übergangswahrscheinlichkeit angepasst, wenn zumindest eine Information aus der digitalen Karte vorhanden ist. Dabei ist die Information der Zelle oder der benachbarten Zelle zugeordnet. Die Einrichtung 314 gibt eine angepasste Übergangswahrscheinlichkeit für den Übergang aus. In einer Einrichtung 316 zum Ermitteln der Austrittswahrscheinlichkeit wird die Austrittswahrscheinlichkeit zumindest unter Verwendung der angepassten Übergangswahrscheinlichkeit ermittelt. Das Navigationssystem 300 kann unter Verwendung der Austrittswahrscheinlichkeit bereits bevor das Fahrzeug den Rand des Geländegebiets erreicht eine Routenführung beginnen.

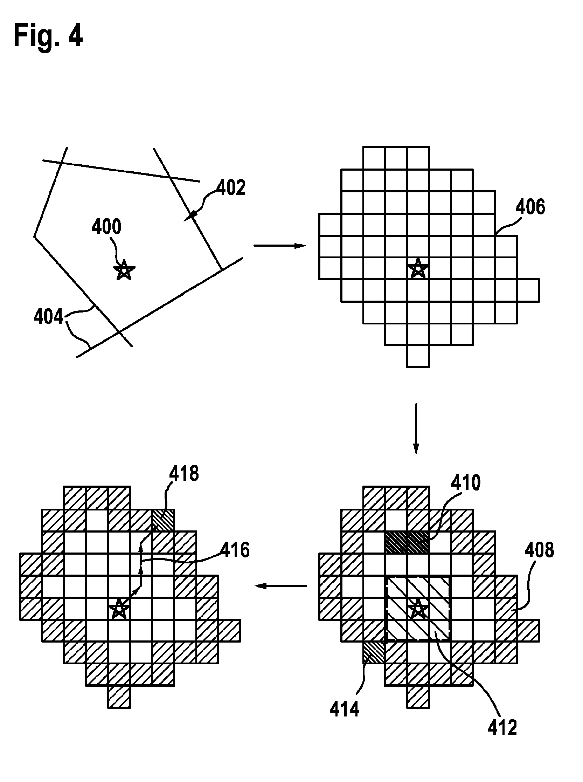

Fig. 4 zeigt eine Vorgehensweise bzw. Ergebnisse, wie ein Verfahren zur Berechnung des wahrscheinlichsten Austrittspunkts aus einem Off-Road Gebiet gemäß einem Ausführungsbeispiel der vorliegenden Erfindung ablaufen könnte. Ein Fahrzeug befindet sich an einer Position 400 innerhalb eines Geländegebiets 402. Das Geländegebiet 402 ist in einer digitalen Karte als offenes Gelände erkennbar. Das Geländegebiet 402 wird von Grenzen 404 umschlossen. Beispielsweise sind die Grenzen 404 Verkehrswege, Gewässer, Bebauung oder unpassierbares Gelände. Das Geländegebiet 402 wird von einem Raster 406 überdeckt, so dass sich einzelne Zellen in diesem Raster ergeben. In diesem Ausführungsbeispiel ist das Raster 406 ein Viereckraster. Jedem Übergang von einer Zelle des Rasters 406 zu einer benachbarten Zelle wird je eine Initial-Übergangswahrscheinlichkeit zugewiesen.

Anschließend werden die Initial-Übergangswahrscheinlichkeiten angepasst. Dazu werden in den Zellen 408 des Rasters 406 die Initial-Übergangswahrscheinlichkeiten angepasst. Am Rand des Geländegebiets 402 erfolgt das Anpassen beispielsweise ansprechend auf eine Klasse des in der Zelle enthaltenen Verkehrswegs oder einer Geländeschwierigkeit des in der Zelle enthaltenen Gewässers, Geländes oder bebauten Gebiets. Entfernt vom Rand erfolgt das Anpassen entsprechend der Geländeschwierigkeit des in der Zelle enthaltenen Gewässers, Geländes oder bebauten Gebiets. Sind Zellen 410 unerreichbar, so werden den Zellen und Übergängen zu diesen Zellen niedrige angepasste Übergangswahrscheinlichkeiten zugewiesen, die repräsentieren, dass es unwahrscheinlich ist diese Zellen aus umliegenden benachbarten Zellen zu erreichen.

Zellen 412 in der Umgebung eines Fahrzeugs an der Position 400 erhalten angepasste Übergangswahrscheinlichkeiten, die an einer Ausrichtung und Geschwindigkeit des Fahrzeugs an der Position 400 orientiert sind. Ein Abstand von einer Eintrittszelle 414 des Fahrzeugs in das offene Gelände beeinflusst Übergangswahrscheinlichkeiten zwischen Zellen in der Umgebung derart, dass ein Wieder-Erreichen der Eintrittszelle 414 bis zu einem gewissen Abstand der Position von der Eintrittszelle 414 im offenen Gelände wahrscheinlicher ist, als ein Nicht-Erreichen. Von der Position 400 wird beispielsweise ein Austrittspfad 416 ermittelt. Der Austrittspfad 416 weist, basierend auf den Initial-Übergangswahrscheinlichkeiten und angepassten Übergangswahrscheinlichkeiten, eine Austrittswahrscheinlichkeit auf, eine bestimmte Zelle auf dem Rand des Geländegebiets zu erreichen. Ein Austrittspfad verläuft somit durch mehrere Zellen des mit dem Raster unterteilten offenen Geländes. Durch einen Vergleich beispielsweise der summierten Übergangswahrscheinlichkeiten der einzelnen Zellen von mehreren unterschiedlichen solcher Austrittspfade, die zu unterschiedlichen Austrittszellen auf dem Rand des Geländegebiets führen, lässt somit ein Austrittspfad bestimmen, der die größte summierte Austrittswahrscheinlichkeit aufweist. Dieser Austrittspfad beschreibt den momentan wahrscheinlichsten Weg, den das Fahrzeug von der Position 400 aus fahren wird. Dieser Austrittspfad 416 führt dann zu einer Zelle am Rand, die die wahrscheinlichste Austrittszelle 418 ist. Ausgehend von der Austrittszelle 418 kann das Navigationssystem im Fahrzeug bereits, bevor das Fahrzeug die Austrittszelle 418 erreicht, eine straßengeführte Navigation vorbereiten oder diese Navigation einleiten, so dass keine Verzögerung auftritt, wenn das Fahrzeug das offene Gelände an dieser Austrittszelle wieder verlässt.

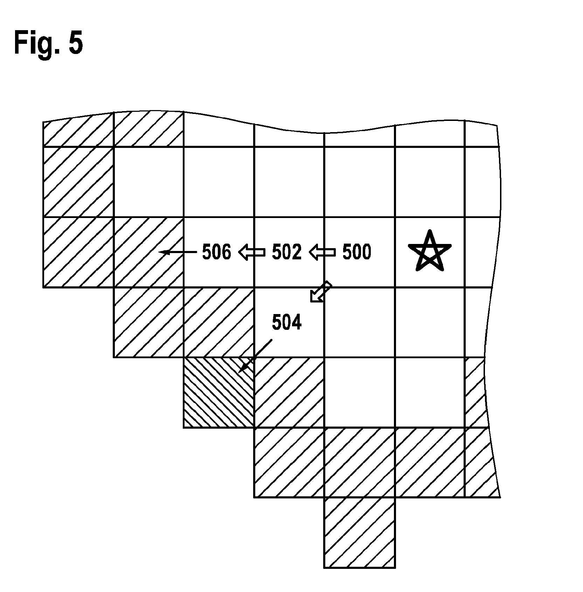

Fig. 5 zeigt eine Vorgehensweise zur Bestimmung einer wahrscheinlichsten Austrittszelle gemäß einem Ausführungsbeispiel der vorliegenden Erfindung. Zwischen einer Position und einem Rand des Geländegebiets befinden sich mehrere Zellen. Mindestens einem der Übergänge zwischen den Zellen, in diesem Fall zwischen der Zelle 500 und der benachbarten Zelle 502 wird eine Initial-Übergangswahrscheinlichkeit zugeordnet. Die Initial-Übergangswahrscheinlichkeit wird ansprechend auf ein Vorhandensein einer Information aus einer digitalen Karte angepasst, um eine angepasste Übergangswahrscheinlichkeit von der Zelle 500 in die benachbarte Zelle 502 zu erhalten. Die Information aus der digitalen Karte betrifft entweder die Zelle 500 oder die benachbarte Zelle 502. Beispielsweise kann die Information ein Hinweis sein, dass in der Zelle 502 ein See oder Weiher enthalten ist, der nicht durchfahren werden kann. Unter Verwendung der angepassten Übergangswahrscheinlichkeit wird eine Austrittswahrscheinlichkeit von einem Fahrzeug in der Zelle 500 zu einer Zelle am Rand des Geländegebiets ermittelt.

Einem weiteren Übergang, in diesem Fall zwischen der Zelle 500 und einer weiteren Zelle 504 wird eine weitere Initial-Übergangswahrscheinlichkeit zugeordnet. Liegen weitere Informationen aus der digitalen Karte entweder zur Zelle 500 oder zur weiteren Zelle 504 vor, so wird die weitere Initial-Übergangswahrscheinlichkeit entsprechend angepasst. Dadurch wird eine weitere angepasste Übergangswahrscheinlichkeit zwischen der Zelle 500 und der weiteren Zelle 504 erhalten. Eine weitere Austrittswahrscheinlichkeit zwischen der Position und einer weiteren Zelle 504 am Rand wird unter Verwendung der weiteren angepassten Übergangswahrscheinlichkeit zwischen der Zelle 500 und der weiteren Zelle 504 ermittelt. Die weitere Zelle 504 am Rand kann eine Zellen sein, die auf dem Rand liegt.

Wenn die Austrittswahrscheinlichkeit höher ist als die weitere Austrittswahrscheinlichkeit, so wird ein Austrittspfad ermittelt, der die Übergangswahrscheinlichkeit enthält. Wenn die weitere Austrittswahrscheinlichkeit höher ist als die Austrittswahrscheinlichkeit, so wird ein anderer Austrittspfad ermittelt, der die weitere Übergangswahrscheinlichkeit von der Zelle 500 in die weitere Zelle 504 enthält. Der Austrittspfad wird dann an Hand einer Abfolge von Übergängen von benachbarten Zellen bestimmt, wobei zur Unterscheidung der einzelnen Übergänge der Übergang zwischen der Zelle 500 und der Folgezelle 506 als Folgeübergang bezeichnet wird. Dem Folgeübergang zwischen der benachbarten Zelle 502 und einer Folgezelle 506 wird dann auch eine Folgeinitial-Übergangswahrscheinlichkeit zugeordnet. Die Folgeinitial-Übergangswahrscheinlichkeit wird ansprechend auf ein Vorhandensein einer Folgeinformation aus der digitalen Karte zu der benachbarten Zelle 502 und/oder der Folgezelle 506 angepasst. Daraus ergibt sich eine angepasste Folgeübergangswahrscheinlichkeit zwischen der benachbarten Zelle 502 und der Folgezelle 506.

## Patentansprüche

1. Verfahren zur Ermittlung zumindest einer Austrittswahrscheinlichkeit aus einem, in einer digitalen Karte als offenes Gelände erkennbaren Geländegebiet (402), ausgehend von einer Position (400) innerhalb des Geländegebiets, wobei das Verfahren die folgenden Schritte umfasst:
Unterteilen (110) des Geländegebiets in eine Mehrzahl von Zellen (406), wobei zumindest einem Übergang von einer Zelle (500) in eine benachbarte Zelle (502) eine Initial-Übergangswahrscheinlichkeit zugeordnet wird, wobei sich der Übergang zwischen der Position und einem Rand des Geländegebiets befindet;
Anpassen (120) der Initial-Übergangswahrscheinlichkeit des Übergangs, ansprechend auf ein Vorhandensein zumindest einer Information aus der digitalen Karte um eine angepasste Übergangswahrscheinlichkeit für den Übergang zu erhalten, wobei die Information der Zelle oder der benachbarten Zelle zugeordnet ist, wobei die Initial-Übergangswahrscheinlichkeit unter Verwendung einer Distanz des Übergangs zu einem Eintrittspunkt (414) eines Fahrzeugs in das offene Gelände (402) angepasst wird; und
Ermitteln (130) der Austrittswahrscheinlichkeit, wobei die Austrittswahrscheinlichkeit zumindest unter Verwendung der angepassten Übergangswahrscheinlichkeit ermittelt wird.

2. Verfahren gemäß Anspruch 1,
wobei im Schritt des Unterteilens (110) das Unterteilen derart erfolgt, dass mehrere Übergänge ein Netz ausbilden, wobei das Netz das Geländegebiet (402) umfasst, und/oder wobei die Zellen auf eine vorherbestimmte maximale Fläche des Geländegebiets begrenzt werden.

3. Verfahren gemäß einem der vorhergehenden Ansprüche, wobei im Schritt (120) des Anpassens die Initial-Übergangswahrscheinlichkeit unter Verwen dung einer Klasse eines Verkehrswegs (404) angepasst wird, wenn die Zelle (500) zumindest den Verkehrsweg beinhaltet und die digitale Karte Informationen über den Verkehrsweg und die Klasse enthält, und/oder wobei die Initial-Übergangswahrscheinlichkeit unter Verwendung zumindest einer Geländeeigenschaft der Zelle (500) oder der benachbarten Zelle (502) angepasst wird, wenn die digitale Karte Informationen über die Geländeeigenschaft enthält.

4. Verfahren gemäß einem der vorhergehenden Ansprüche, wobei im Schritt des Anpassens (120) die Initial-Übergangswahrscheinlichkeit unter Verwendung einer Bewegungsrichtung und/oder einer Geschwindigkeit eines Fahrzeugs, in dem das Verfahren ausgeführt wird, angepasst wird.

5. Verfahren gemäß einem der vorhergehenden Ansprüche, wobei im Schritt des Unterteilens (110) zumindest einem weiteren Übergang von der Zelle (500) in eine weitere benachbarte Zelle (504) eine weitere Initial-Übergangswahrscheinlichkeit zugeordnet wird, wobei sich der weitere Übergang zwischen der Position (400) und einem Rand des Geländegebiets befindet;
wobei im Schritt des Anpassens (120) der weiteren Initial-Übergangswahrscheinlichkeit des weiteren Übergangs, die weitere Initial-Übergangswahrscheinlichkeit ansprechend auf ein Vorhandensein zumindest einer weiteren Information aus der digitalen Karte angepasst wird, um eine weitere angepasste Übergangswahrscheinlichkeit für den weiteren Übergang zu erhalten, wobei die weitere Information der Zelle (500) oder der weiteren benachbarten Zelle (504) zugeordnet ist; und
wobei im Schritt des Ermittelns (130) eine weitere Austrittswahrscheinlichkeit ermittelt wird, wobei die weitere Austrittswahrscheinlichkeit zumindest unter Verwendung der weiteren angepassten Übergangswahrscheinlichkeit des weiteren Übergangs ermittelt wird.

6. Verfahren gemäß Anspruch 5, wobei im Schritt des Ermittelns (130) ein Austrittspfad (416) aus dem Geländegebiet (402) ermittelt wird, wobei der Austrittspfad den Übergang zwischen der Zelle (500) und der benachbarten Zelle (502) enthält, wenn die Austrittswahrscheinlichkeit höher ist, als die weitere Austrittswahrscheinlichkeit.

7. Verfahren gemäß einem der vorhergehenden Ansprüche, wobei im Schritt des Unterteilens (110) zumindest einem Folgeübergang von der benachbarten Zelle (502) in eine benachbarte Folgezelle (506) eine Folgeinitial-Übergangswahrscheinlichkeit zugeordnet wird, wobei sich der Folgeübergang zwischen der Position (400) und einem Rand des Geländegebiets (402) befindet;
wobei im Schritt des Anpassens (120) die Folgeinitial-Übergangswahrscheinlichkeit des Folgeübergangs, die Folgeinitial-Übergangswahrscheinlichkeit ansprechend auf ein Vorhandensein zumindest einer Folgeinformation aus der digitalen Karte angepasst wird, um eine angepasste Folgeübergangswahrscheinlichkeit für den Folgeübergang zu erhalten, wobei die Folgeinformation der benachbarten Zelle (502) oder der Folgezelle (506) zugeordnet ist; und
wobei im Schritt des Ermittelns (130) die Austrittswahrscheinlichkeit unter Verwendung der angepassten Folgeübergangswahrscheinlichkeit des Folgeübergangs ermittelt wird.

8. Vorrichtung (310) zur Ermittlung zumindest einer Austrittswahrscheinlichkeit aus einem, in einer digitalen Karte als offenes Gelände erkennbaren Geländegebiet (402), ausgehend von einer Position (400) innerhalb des Geländegebiets, wobei die Vorrichtung die folgenden Merkmale aufweist:
eine Einrichtung (312) zum Unterteilen des Geländegebiets in eine Mehrzahl von Zellen (406), wobei zumindest einem Übergang von einer Zelle (500) in eine benachbarte Zelle (502) eine Initial-Übergangswahrscheinlichkeit zugeordnet wird, wobei sich der Übergang zwischen der Position und einem Rand des Geländegebiets befindet;
eine Einrichtung (314) zum Anpassen der Initial-Übergangswahrscheinlichkeit des Übergangs, ansprechend auf ein Vorhandensein zumindest einer Information aus der digitalen Karte, um eine angepasste Übergangswahrscheinlichkeit für den Übergang zu erhalten, wobei die Information der Zelle (500) oder der benachbarten Zelle (502) zugeordnet ist, wobei die Einrichtung (314) ausgebildet ist, um die Initial-Übergangswahrscheinlichkeit unter Verwendung einer Distanz des Übergangs zu einem Eintrittspunkt (414) des Fahrzeugs in das offene Gelände (402) anzupassen; und
eine Einrichtung (316) zum Ermitteln der Austrittswahrscheinlichkeit, wobei die Austrittswahrscheinlichkeit zumindest unter Verwendung der angepassten Übergangswahrscheinlichkeit des Übergangs ermittelt wird.

9. Computerprogrammprodukt mit Programmcode, der auf einem maschinenlesbaren Träger gespeichert ist, zur Durchführung des Verfahrens nach einem der Ansprüche 1 bis 7, wenn das Programm auf einer Vorrichtung ausgeführt wird.

## Claims

1. Method for ascertaining at least one probability of exit from an area of terrain (402), identifiable on a digital map as open country, on the basis, of a position (400) within the area of terrain, wherein the method comprises the following steps:
the area of terrain is divided (110) into a plurality of cells (406), wherein at least one transit from a cell (500) to an adjacent cell (502) is assigned an initial transit probability, the transit being situated between the position and an edge of the area of terrain;
the initial transit probability of the transit is adapted (120), in response to a presence of at least one piece of information from the digital map, in order to obtain an adapted transit probability for the transit, wherein the information is associated with the cell or the adjacent cell, the initial transit probability being adapted by using a distance for the transit to a point of entry (414) for a vehicle into the open country (402); and
the probability of exit is ascertained (130), the probability of exit being ascertained at least by using the adapted transit probability.

2. Method according to Claim 1, wherein in the step of dividing (110), division takes place such that multiple transits form a network, wherein the network comprises the area of terrain (402), and/or wherein the cells are limited to a predetermined maximum surface area of the area of terrain.

3. Method according to either of the preceding claims, wherein in the step (120) of adapting, the initial transit probability is adapted by using a class of a traffic route (404) if the cell (500) contains at least the traffic route and the digital map contains information about the traffic route and the class, and/or wherein the initial transit probability is adapted by using at least one terrain property of the cell (500) or of the adjacent cell (502) if the digital map contains information about the terrain property.

4. Method according to one of the preceding claims,
wherein in the step of adapting (120), the initial transit probability is adapted by using a direction of movement and/or a speed of a vehicle in which the method is carried out.

5. Method according to one of the preceding claims, wherein in the step of dividing (110), at least one further transit from the cell (500) to a further adjacent cell (504) is assigned a further initial transit probability, the further transit being situated between the position (400) and an edge of the area of terrain;
wherein in the step of adapting (120) the further initial transit probability of the further transit, the further initial transit probability is adapted in response to a presence of at least one further piece of information from the digital map in order to obtain a further adapted transit probability for the further transit, the further information being associated with the cell (500) or the further adjacent cell (504); and
wherein in the step of ascertaining (130), a further probability of exit is ascertained, the further probability of exit being ascertained at least by using the further adapted transit probability of the further transit.

6. Method according to Claim 5, wherein in the step of ascertaining (130), an exit path (416) from the area of terrain (402) is ascertained, the exit path containing the transit between the cell (500) and the adjacent cell (502) if the probability of exit is higher than the further probability of exit.

7. Method according to one of the preceding claims,
wherein in the step of dividing (110), at least one subsequent transit from the adjacent cell (502) to an adjacent subsequent cell (506) is assigned a subsequent initial transit probability, the subsequent transit being situated between the position (400) and an edge of the area of terrain (402);
wherein in the step of adapting (120) the subsequent initial transit probability of the subsequent transit, the subsequent initial transit probability is adapted in response to a presence of at least one piece of subsequent information from the digital map in order to obtain an adapted subsequent transit probability for the subsequent transit, the subsequent information being associated with the adjacent cell (502) or the subsequent cell (506); and
wherein in the step of ascertaining (130), the probability of exit is ascertained by using the adapted subsequent transit probability of the subsequent transit.

8. Apparatus (310) for ascertaining at least one probability of exit from an area of terrain (402), identifiable on a digital map as open country, on the basis of a position (400) within the area of terrain, wherein the apparatus has the following features:
a device (312) for dividing the area of terrain into a plurality of cells (406), wherein at least one transit from a cell (500) to an adjacent cell (502) is assigned an initial transit probability, the transit being situated between the position and an edge of the area of terrain;
a device (314) for adapting the initial transit probability of the transit, in response to a presence of at least one piece of information from the digital map, in order to obtain an adapted transit probability for the transit, wherein the information is associated with the cell (500) or the adjacent cell (502), the device (314) being designed to adapt the initial transit probability by using a distance for the transit to a point of entry (414) for the vehicle into the open country (402); and
a device (316) for ascertaining the probability of exit, the probability of exit being ascertained at least by using the adapted transit probability of the transit.

9. Computer program product having program code, which is stored on a machine-readable storage medium, for performing the method according to one of Claims 1 to 7 when the program is executed on an apparatus.

## Revendications

1. Procédé de détermination d'au moins une probabilité de sortie à partir d'un terrain (402) identifiable sur une carte numérique comme étant un terrain dégagé, à partir d'une position (400) sur le terrain, dans lequel le procédé comprend les étapes consistant à :
subdiviser (110) le terrain en une pluralité de cellules (406), dans lequel une probabilité initiale de transition est attribuée pour au moins une transition entre une cellule (500) et une cellule adjacente (502), dans lequel la transition se situe entre la position et un bord du terrain ;
adapter (120) la probabilité initiale de transition d'une manière qui correspond à l'existence d'au moins une information issue de la carte numérique, afin d'obtenir une probabilité de transition adaptée pour la transition, dans lequel l'information est associée à la cellule ou à la cellule adjacente, dans lequel la probabilité initiale de transition est adaptée en utilisant une distance de la transition à un point d'entrée (414) d'un véhicule dans le terrain dégagé (402) ; et
déterminer (130) la probabilité de sortie, dans lequel la probabilité de sortie est déterminée en utilisant au moins la probabilité de transition adaptée.

2. Procédé selon la revendication 1, dans lequel, lors de l'étape de subdivision (110), la subdivision est effectuée de manière à ce que plusieurs transitions forment un réseau, dans lequel le réseau comprend le terrain (402), et/ou dans lequel les cellules sont limitées à une surface maximale prédéterminée du terrain.

3. Procédé selon l'une quelconque des revendications précédentes, dans lequel, lors de l'étape (120) d'adaptation, la probabilité initiale de transition est adaptée en utilisant une classe d'une voie de circulation (404) lorsque la cellule (500) contient au moins la voie de circulation et lorsque la carte numérique contient des informations concernant la voie de circulation et la classe, et/ou dans lequel la probabilité initiale de transition est adaptée en utilisant au moins une propriété de terrain de la cellule (500) ou de la cellule adjacente (502), lorsque la carte numérique contient des informations concernant la propriété du terrain.

4. Procédé selon l'une quelconque des revendications précédentes, dans lequel, lors de l'étape (120) d'adaptation, la probabilité initiale de transition est adaptée en utilisant une direction de déplacement et/ou une vitesse d'un véhicule dans lequel le procédé est mis en oeuvre.

5. Procédé selon l'une quelconque des revendications précédentes, dans lequel, lors de l'étape de subdivision (110), une autre probabilité initiale de transition est attribuée à au moins une autre transition entre la cellule (500) et une autre cellule adjacente (504), dans lequel l'autre transition se situe entre la position (400) et un bord du terrain ;
dans lequel, lors de l'étape (120) d'adaptation de l'autre probabilité initiale de transition de l'autre transition, l'autre probabilité initiale de transition est adaptée d'une manière qui correspond à l'existence d'au moins une autre information issue de la carte numérique, afin d'obtenir une autre probabilité de transition adaptée pour l'autre transition, dans lequel l'autre information est associée à la cellule (500) ou à l'autre cellule adjacente (504) ; et
dans lequel, lors de l'étape de détermination (130), une autre probabilité de sortie est déterminée, dans lequel l'autre probabilité de sortie est au moins déterminée en utilisant l'autre probabilité de transition adaptée de l'autre transition.

6. Procédé selon la revendication 5, dans lequel, lors de l'étape de détermination (130), un trajet de sortie (416) du terrain (402) est déterminé, dans lequel le trajet de sortie contient la transition entre la cellule (500) et la cellule adjacente (502) lorsque la probabilité de sortie est plus élevée que l'autre probabilité de sortie.

7. Procédé selon l'une quelconque des revendications précédentes, dans lequel, lors de l'étape de subdivision (110), une probabilité initiale de transition suivante est attribuée à au moins une transition suivante entre la cellule adjacente (502) et une cellule adjacente suivante (506), dans lequel la transition suivante se situe entre la position (400) et un bord du terrain (402) ;
dans lequel, lors de l'étape d'adaptation (120) de la probabilité de transition initiale suivante de la transition suivante est adaptée d'une manière qui correspond à l'existence d'au moins une information suivante issue de la carte numérique, afin d'obtenir une probabilité de transition suivante adaptée pour la transition suivante, dans lequel l'information suivante est associée à la cellule adjacente (502) ou à la cellule suivante (506) ; et
dans lequel, lors de l'étape de détermination (130), la probabilité de sortie est déterminée en utilisant la probabilité de transition suivante adaptée de la transition suivante.

8. Dispositif (310) destiné à déterminer au moins une probabilité de sortie à partir d'un terrain (402) identifiable sur une carte numérique comme étant un terrain dégagé, à partir d'une position (400) sur le terrain, dans lequel le dispositif comprend les éléments caractéristiques suivants :
un moyen (312) destiné à subdiviser le terrain en une pluralité de cellules (406), dans lequel une probabilité initiale de transition est attribuée pour au moins une transition entre une cellule (500) et une cellule adjacente (502), dans lequel la transition se situe entre la position et un bord du terrain ;
un moyen (314) destiné à adapter la probabilité initiale de transition d'une manière qui correspond à l'existence d'au moins une information issue de la carte numérique, afin d'obtenir une probabilité de transition adaptée pour la transition, dans lequel l'information est associée à la cellule (500) ou à la cellule adjacente (502), dans lequel le moyen (314) est conçu pour adapter la probabilité initiale de transition en utilisant une distance de la transition à un point d'entrée (414) du véhicule dans le terrain dégagé (402) ; et
un moyen (316) destiné à déterminer la probabilité de sortie, dans lequel la probabilité de sortie est déterminée au moins en utilisant la probabilité de transition adaptée de la transition.

9. Produit de programme informatique comportant un code de programme qui est stocké sur un support lisible par machine, destiné à mettre en oeuvre le procédé selon l'une quelconque des revendications 1 à 7, lorsque le programme est exécuté sur un dispositif.
